# EUROPEAN PATENT APPLICATION

(11) **EP 2 123 779 A1**
(43) Date of publication of application: **25.11.2009**
(21) Application number: 09447017.6
(22) Date of filing: 30.04.2009
(51) Int. Cl.: C21D 9/36, C21D 9/40, C22C 38/18, F16C 33/12

(54) **Method for increasing the fatigue strength of a predominantly steel mechnical part of a wind turbine and/or for reducing the tendancy to form "White etching cracks" or "brittle flakes" in such steel mechanical parts**

(30) Priority: 20.05.2008 BE 200800281
(71) Applicant: HANSEN TRANSMISSIONS INTERNATIONAL, naamloze vennootschap, 2650 Edegem (BE)
(72) Inventor: Luyckx, Johan Louis, 3740 Bilzen (BE); Broeders, Ward Christ, 3665 AS (BE); Van Geertsom, Jan, 2650 Edegem (BE)
(74) Representative: Donné, Eddy

(57) **Abstract**

Method for increasing the fatigue strength of a mechanical part of a wind turbine and/or for reducing the tendency to form what are called "white etching cracks" or "brittle flakes" in such a bearing, **characterised in that** it consists in making one or several of the bearing rings and/or roller elements concerned of the bearing at least partly of a hardened steel having a carbon content between 0,4 and 0,8 percent by weight.

## Description

The present invention concerns a method for increasing the fatigue strength of a predominantly steel mechanical part of a wind turbine and/or for reducing the tendency to form what are called "white etching cracks" or "brittle flakes" in such steel mechanical parts.

Without restricting the invention thereto, it aims in particular to apply such a method to a mechanical part which is entirely or almost entirely made of steel and which makes contact with other steel mechanical parts, whereby both mechanical parts roll and/or slide over one another while they are operational.

Such a steel mechanical part may be for example a bearing of the gearbox of a wind turbine, for example a bearing ring or a roller element of such a bearing or the like.

It is known that, when mechanical parts roll and slide over one another, certain wear and fatigue symptoms occur.

A special form of such fatigue is known from certain ball bearings and roller bearings as are used for example in wind turbines to support the rotor shaft in the housing of the wind turbine in a rotating manner or for example in a planetary gear unit to support the planet wheels in relation to a planet carrier.

After having been loaded for example more than 2,500 hours or for example more than 10,000 hours, fatigue phenomena may be observed in such bearings whereby brittle flakes peel off the roller elements or the bearing surfaces of the bearing.

The formation of said brittle flakes is always accompanied by the formation of smaller cracks and/or transformed areas under the surface of the machine part in question.

These cracks and areas can be made visible by microscope, for example within the context of a fatigue research.

A sample is hereby taken of the machine part which has been exposed to rolling and/or sliding load for quite some time, after which this sample is etched with appropriate chemical products, such that cracks and transformed areas can be clearly observed.

A characteristic of the fatigue occurring as a result of said rolling and/or sliding is that in the brittle flakes or in the vicinity of the brittle flakes, cracks, areas, bands and/or layers can be observed in the microscope which colour white under the microscope.

Also, the aforesaid characteristics which can be observed in the microscope are often indicated as white etching cracks, white etching area, white etching layer, white etching band, etc.

These transformed white etching areas and white etching cracks may be formed around an inclusion in the material from where they grow.

According to the present state of the art and science, the underlying mechanism for the formation of brittle flakes and white etching cracks as a result of a rolling and/or sliding load is not known yet.

Some say the formation of brittle flakes is caused by the infiltration in the steel of hydrogen radicals coming from lubricants, but this theory seems inadequate.

Nor is it likely to explain said fatigue phenomenon on the basis of stress occurring during the load, since, in practice, the fatigue phenomenon already occurs at load levels in the machine parts which are significantly lower than the load levels that are observed in fatigue tests carried out in laboratories on said mechanical parts.

Said fatigue phenomenon is undesirable of course, as it determines the life of the mechanical part.

Known mechanical parts, such as for example a planet bearing in the planetary gear unit of a gearbox or the like, or other mechanical parts that are subjected to similar loads, are made of a type of steel which is often hardened according to some method or other in order to improve its mechanical qualities.

According to the present state of the art, many mechanical parts are made of a hardened steel of one of the following types: what is called fully hardened steel, case-hardened steel, induction-hardened steel or laser-hardened steel.

Fully hardened steel has a carbon content that is typically situated between 0,9 and 1,1 percent by weight.

During its production, fully hardened steel is subjected to a heat treatment which consists in heating the steel up to the austenitic area of the iron/carbon diagram (825° to 950° C), after which the steel is quickly cooled in cold water, oil or air.

An advantage of the use of such steel for manufacturing machine parts is that it has a high hardness and resistance to wear.

The reason therefore is that, as a result of the fast cooling, the steel crystallizes according to a fine-grained martensitic structure.

The carbon, which is present to a large extent, is hereby partly included in the iron as a result of the fast cooling on the one hand, such that a metal matrix is formed out of a martensitic structure in which high inner strains are present which contribute to the high hardness of the metal matrix.

The presence of chromium and possibly also other elements improves or stabilises the binding of the available carbon with iron on the other hand, so as to form carbides providing additional hardness to the metal matrix.

As a variant, the variation in temperature during the cooling may be controlled such that a metal matrix with a bainite structure instead of a martensitic structure is obtained.

Another advantage of such fully hardened steel is that it is rather inexpensive to produce, since it stays less long in the oven than for example case-hardened steel, typically less than 8 hours.

However, such fully hardened steel has a rather high brittleness and, as already mentioned, with a repeated load of parts rolling and/or sliding over one another, brittle flakes will peel off as mentioned above.

Case-hardened steel has a lower overall carbon content, usually between 0,1 and 0,3 percent by weight, whereby this steel is subjected to a special heat treatment which is called case hardening.

During such case hardening, the steel is carburized or carbonised by heating the steel and exposing it to a carbon and/or nitrogen-rich environment.

The outer layer of the heated steel hereby absorbs carbon and/or nitrogen, whereby the penetration depth increases as a function of the exposure length.

After the carburization or carbonisation, the steel is also hardened by cooling it.

An advantage of case-hardened steel is that the outer layer of the work piece, thanks to its higher carbon and/or nitrogen content and thanks to an appropriate hardening, will have a martensitic structure that is hard and resistant to wear, whereas the core of the work piece with a lower carbon content will have a higher tenacity and will be easier to work.

Case hardening may take several hours (10 to 150 hours), which is disadvantageous in that it is a costly process.

Alternative manners to obtain a work piece with a hardened outer layer and a more tenacious core rely on induction hardening or laser hardening.

In case of induction hardening, a high-frequency induction current is induced in the outer surfaces of the work piece to be hardened by means of a coil, as a result of which these outer surfaces are heated.

In the case of laser hardening, the outer surfaces are heated by means of a laser.

Afterwards, the work piece is quenched by quickly cooling it in an appropriate manner, for example in a tank filled with water, oil or the like.

As a result, also induction-hardened steel and laser-hardened steel are advantageous in that the outer layer, thanks to an appropriate hardening, has a martensitic structure which is hard and resistant to wear, whereas the core of the work piece has a higher tenacity and is easier to work.

Both techniques are moreover advantageous in that they can be carried out very fast, which implies that they are relatively inexpensive processes.

As mentioned above, fatigue phenomena occur in mechanical parts which are manufactured according to a known method out of one of the above-mentioned types of steel whereby, in some cases, brittle flakes are formed due to loads on mechanical parts rolling and/or sliding over one another.

Also, the present invention aims to remedy one or several of the above-mentioned and other disadvantages.

In particular, the present invention aims a practical and economically advantageous method with which the tendency of the steel mechanical parts of a wind turbine, such as a bearing, to form brittle flakes can be reduced and/or the general fatigue strength of such a mechanical part can be increased.

To this end, the present invention concerns a method for increasing the fatigue strength of predominantly steel mechanical parts of a wind turbine and/or for reducing the tendency to form what are called white etching cracks or brittle flakes of such steel mechanical parts, whereby this method consists in manufacturing the mechanical part at least partly out of a hardened steel with a carbon content situated between 0,4 and 0,8 percent by weight.

For, according to the invention, on the basis of certain observations it may be concluded that a hardened steel with a carbon content between 0,4 and 0,8 percent by weight surprisingly shows no or little tendency to form white etching cracks, white etching areas or the like under a rolling and/or sliding load and that, consequently, such steel also shows more resistance to the formation of brittle flakes or, in short, has a better fatigue strength.

Naturally, an advantage of such a method according to the invention is that the machine parts of the wind turbine which are made out of a hardened steel with a carbon content between 0,4 and 0,8 percent by weight have a longer life.

According to a preferred method of the invention, the above-mentioned elements of the mechanical part of the wind turbine which are made of hardened steel are hardened by means of full hardening, and preferably said elements are even entirely full-hardened.

According to an alternative method of the invention, however, an improved fatigue strength can also be obtained by hardening the above-mentioned elements of the mechanical part of a wind turbine which are made of hardened steel with a carbon content between 0,4 and 0,8 percent by weight by means of induction hardening or laser hardening, for example over a certain hardening depth of their outer surface.

An advantage of such methods according to the invention is that a higher fatigue strength is obtained as a result of an appropriate selection of the carbon content, whereas the technique is nonetheless relatively inexpensive, since full hardening, induction hardening or laser hardening is many times cheaper than a production process whereby for example case hardening is applied.

According to an even more preferred method of the invention, when cooling the steel of the above-mentioned elements of the mechanical part of a wind turbine so as to harden it, the variation in temperature as a function of time is controlled such that a predominantly martensitic metal matrix is obtained with little or no carbide formation, for example a metal matrix which consists of at least 50% martensite, but preferably even 80% martensite with either or not a little residual austenite.

An advantage of such steel according to the present embodiment is that it is very hard and resistant to wear. The large presence of martensite can be obtained by cooling the steel fast enough while hardening it.

One has to take special care in this case that the parts in the core of the steel to be cooled cool down fast enough as well, such that the core does not get the chance to crystallize as pearlite.

When martensite is formed in the core as well thanks to a sufficiently rapid cooling, one speaks about entirely full-hardened steel.

According to another method of the invention, when cooling the steel of the above-mentioned hardened elements of the mechanical part of a wind turbine in order to harden the steel, the variation in temperature as a function of time is controlled such that a predominantly bainitic metal matrix is obtained with little or no carbide formation, for example a metal matrix consisting of at least 50% bainite, but better still of 80% bainite.

Such a bainitic structure is obtained by cooling the mechanical part to be hardened somewhat less fast than necessary during the quenching in order to obtain a metal matrix with a martensitic structure.

In particular, the formation of carbides is preferably restricted to less than 2% carbides measured as a portion of the surface with one of the above-mentioned methods according to the invention.

According to another preferred method according to the invention, the steel to be hardened is alloyed with one of the following elements or a combination thereof: Cr, Mn, Si, Mo, V.

By combining these and possibly other elements in an appropriate manner, an alloyed steel with improved qualities can be obtained, for example as the presence of the element restricts the formation of carbides or the like.

The invention proves to be particularly useful when the method is applied to the bearings of a wind turbine, in particular to one or several of the bearing rings and/or roller elements of the bearings concerned, or to a part of a gearbox, such as for example to the bearing of the gearbox of a wind turbine.

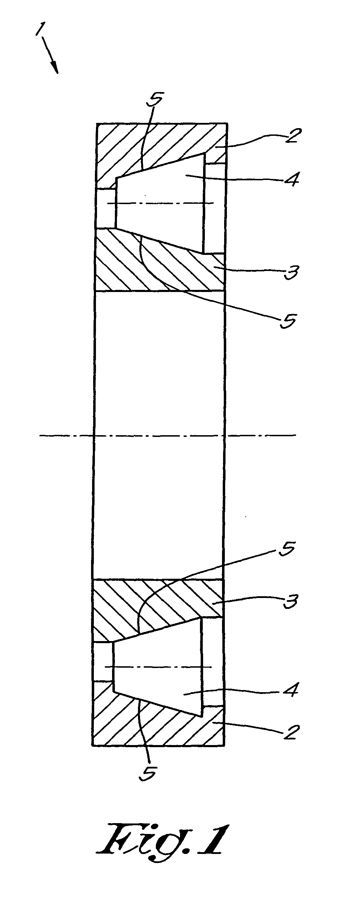

In order to better explain the characteristics of the invention, the following preferred method according to the invention is described by way of example only without being limitative in any way, with reference to the accompanying figure 1, whereby:
this figure 1 represents a taper roller bearing of the gearbox of a wind turbine, seen as a section, which bearing is manufactured according to a method of the invention.

Many fields of application are known whereby mechanical parts which are predominantly made of steel roll and/or slide over one another, and whereby the fatigue phenomenon as discussed in the introduction may occur.

Typical fields of application which are also concerned by the invention are the field of gearboxes as well as the field of bearings, more in particular the field of gearboxes and bearings of wind turbines.

As is known, wind turbines are equipped with a gearbox whereby the input shaft is connected to or is formed of the rotor shaft of the wind turbine and the output shaft is coupled to an electric generator or the like.

The gearbox usually comprises one or several planetary gear units and/or gear wheel transmissions with parallel shafts with which the slow rotation of the rotor blades of the wind turbine is transformed in a quick rotation at the output shaft of the gearbox.

In such applications, the rotor shaft in the housing of the wind turbine or in the housing of the gearbox is bearing-mounted by means of a pair of bearings or, in the more integrated designs of wind turbines, by means of only one main bearing.

Further, in such applications, the rotating components such as the gear wheels, shafts and planet carriers of the gear units and gear wheel transmissions are bearing-mounted for example in the housing of the gearbox or for example on a rotating planet carrier by means of one or several bearings.

An example of such a bearing is represented in figure 1, seen as a section, whereby the bearing is in this case a taper roller bearing 1 with an outer bearing ring 2 and an inner bearing ring 3 in between which are provided tapered rollers 4.

The inner bearing ring 3 can hereby be connected in a fixed manner to the rotating rotor shaft of the wind turbine for example, and the outer bearing ring 2 to the stationary housing of the gearbox or the housing of the wind turbine, but the opposite is possible just as well.

In another case where the bearing 1 serves as a planet bearing, the inner bearing ring 3 can be connected to a planet shaft on a planet carrier in a fixed manner and the outer bearing ring 2 to a planet wheel which is subjected to an unrolling movement as a result of the combined tooth meshing with a centrally erected sun gear and planetary gear.

It is clear that, during the relative movement of the outer bearing ring 2 and the inner bearing ring 3 in relation to one another, the tapered rollers 4 roll over the raceways 5 and/or slide off the bearing rings 2 and 3.

These facts are all known as such according to the present state of the art.

Significant to the invention is the observation that, in such an application but just as well in other applications, after having been operational for a certain while, for example typically some 10,000 hours, a certain fatigue phenomenon occurs during the rolling and/or sliding of the mechanical parts, in this case the bearing rings 2 and 3, as well as the tapered rollers 4, which scientists have not been able to explain up to now.

It is observed that, on the surfaces of one or several of the above-mentioned mechanical parts 2-4, brittle flakes may start to crumble off.

Together with such a fatigue phenomenon are moreover observed, as explained in the introduction, cracks ("white etching cracks") and/or transformed areas ("white etching areas") which colour white under the microscope after etching, meaning that these areas can no longer be affected by the etching agent.

This special form of fatigue may already occur at low loads.

According to the invention, this problem is solved by making one or several of the bearing parts 2 to 4 entirely or partly out of a steel having a higher fatigue strength with regard to the above-mentioned rolling and/or sliding load.

For, according to the invention, a higher fatigue strength or a reduced tendency to form what are called white etching cracks or brittle flakes can be obtained by using a steel having a carbon content between 0,4 and 0,8 percent by weight, whereby the steel has been subjected to a heat treatment in the form of a hardening.

The use of such hardened steel with a rather average carbon content between 0,4 and 0,8 percent by weight in a mechanical part, such as for example the bearing of a wind turbine, is contrary to most common methods, whereby the steel which is selected for the hardened elements is always a steel having a higher carbon content (typically between 0,9 and 1,1 % C), since more carbon inclusions in the martensite structure or bainite structure result in a greater hardness and resistance to wear.

Thus, we know bearings that are entirely full-hardened whereby the steel has a carbon content in the above-mentioned range between 0,9 and 1,1 percent by weight.

A known alternative solution is the use of case-hardened mechanical parts which, as explained in the introduction, have a core with a lower carbon content (0,1 to 0,3 % by weight C) and a higher tenacity, whereas the outer surfaces of the mechanical part are carbonized or carburized, resulting in a higher carbon content in said outer layers as well, and whereby these outer layers have a higher hardness and resistance to wear.

According to the invention, by using a steel with an average carbon content between 0,4 and 0,8 percent by weight and by full-hardening this steel just as a conventional fully hardened steel, a laser-hardened steel or an induction-hardened steel with a higher carbon content, a steel is obtained which, as expected according to the present state of the art, has lesser mechanical qualities as far as hardness and resistance to wear are concerned, but which has a much better fatigue strength with regard to loads whereby parts roll and/or slide over one another.

In general, however, the invention proves that the life of a machine part, in particular a mechanical part of a wind turbine, for example the gearbox of a wind turbine, which is made of steel in accordance with the invention increases as a result thereof, since it is found according to the invention that said life is first of all restricted by a fatigue strength that is too low.

Contrary to what is generally assumed, it is now found that it is not the hardness and resistance to wear of the machine part which restrict the life of the machine part to a certain maximum value.

Consequently, it is not necessary according to the invention to use a fully hardened steel for the elements of the bearing or another mechanical part of a wind turbine to be hardened having a carbon content of more than 0,9 percent by weight or a case-hardened steel having a carbonized or carburized outer layer with an equally high carbon content.

On the contrary, according to the invention it is better to use a hardened steel with an average carbon percentage between 0,4 and 0,8 percent by weight, resulting in a slightly lesser hardness, but a better fatigue strength and thus, on the whole, a material having better qualities for a durable application.

According to a preferred method of the invention, the above-mentioned elements of the bearing 1 which are made of a hardened steel having an average carbon content are made of steel which is hardened by means of full-hardening, better still which is entirely full-hardened, since this is a simple and inexpensive technique compared to some other techniques.

According to an alternative method in conformity with the invention, certain steel elements of the bearing 1 having an average carbon content between 0,4 and 0,8 percent by weight are also hardened for example at their outer surface by means of induction hardening or laser hardening, for example up to a certain hardening depth.

Such a method for improving the fatigue strength is interesting as well, since induction hardening and laser hardening can be carried out fast and are relatively inexpensive techniques as well.

According to the invention, when cooling the steel so as to harden it, the variation in temperature as a function of time is preferably controlled such that a predominantly martensitic metal matrix is obtained with preferably only little or no carbide formation, preferably even a carbide content which is lower than 2% measured as a portion of the surface.

Alternatively, the cooling can be controlled such that a predominantly bainitic metal matrix is obtained with preferably only little or no carbide formation, preferably even less than 2% carbides measured as a portion of the surface.

The metal matrix of the steel according to a method in accordance with the invention preferably consists of at least 80% and better still 90% martensite, or alternatively bainite.

In order to further improve the qualities of the hardened steel, it is not excluded according to another preferred method in accordance with the invention to alloy the steel with for example Cr, Mn, Si, Mo, V or the like or a combination thereof.

In this way, the critical cooling speed can be reduced for example, whereby an entire full-hardening is nevertheless obtained, such that also the thermal stress in the steel can be restricted and for example the formation of cracks resulting from the full-hardening can be avoided.

Since, according to certain methods of the invention, the steel is hardened in a common full-hardening process or by means of induction hardening or laser hardening and for example preferably not by means of case hardening, enormous savings can be made, since the steel stays far less long in the oven in case of a common full-hardening, laser hardening or induction hardening than in the case of case-hardening.

It is clear that the method according to the invention can be applied to many types of machine parts or the mechanical parts of a wind turbine whereby, with the known steel types, the above-mentioned fatigue phenomenon occurs, such as for example to manufacture the bearings of a wind turbine or parts of the gearbox of a wind turbine or the like, or parts of large lifting devices such as cranes or the like, or rotating parts such as rotors and alternators and many other possible objects.

The present invention in particular also concerns the treatment of bearings of a wind turbine whereby such a method according to the invention for increasing the fatigue strength and/or for reducing the tendency to form white etching cracks or brittle flakes is applied, in particular bearings whereby at least one or several of the bearing rings and/or roller elements of the bearing are at least partly made of a hardened steel having a carbon content between 0,4 and 0,8 percent by weight.

The present invention is by no means restricted to the method according to the invention for increasing the fatigue strength of a predominantly steel mechanical part of a wind turbine, described by way of example and represented in the accompanying figure; on the contrary, such a method may comprise various other steps or it can be applied to other tools or machine parts while still remaining within the scope of the invention.

## Claims

1. Method for increasing the fatigue strength of a predominantly steel mechanical part (1) of a wind turbine and/or for reducing the tendency to form what are called "white etching cracks" or "brittle flakes" in such steel mechanical part (1), **characterised in that** it consists in making the mechanical part at least partly out of a hardened steel having a carbon content between 0,4 and 0,8 percent by weight.

2. Method according to claim 1, **characterised in that** it is applied to a part of the gearbox of a wind turbine.

3. Method according to claim 1 or 2, **characterised in that** the above-mentioned elements of the mechanical part (1) which are made of hardened steel are hardened by means of full-hardening.

4. Method according to claim 3, **characterised in that** the above-mentioned elements of the mechanical part(1) which are made of hardened steel are entirely full-hardened.

5. Method according to claim 1, **characterised in that** the above-mentioned elements of the mechanical part (1) which are made of hardened steel are hardened by means of induction hardening.

6. Method according to claim 1, **characterised in that** the above-mentioned elements of the mechanical part (1) which are made of hardened steel are hardened by means of laser hardening.

7. Method according to any one of the preceding claims, **characterised in that,** when cooling the steel so as to harden it, the variation in temperature as a function of time is controlled such that a predominantly martensitic metal matrix is obtained with little or no carbide formation.

8. Method according to any one of the preceding claims, **characterised in that,** when cooling the steel so as to harden it, the variation in temperature as a function of time is controlled such that a predominantly bainitic metal matrix is obtained with little or no carbide formation.

9. Method according to claim 7 or 8, **characterised in that** a hardened steel is used with a martensite content, bainite content respectively, of more than 80 percent by weight.

10. Method according to claim 7 or 8, **characterised in that** the formation of carbides is restricted to less than 2% carbides measured as a portion of the surface.

11. Method according to any one of the preceding claims, **characterised in that** the hardened steel is alloyed with one of the following elements or a combination thereof: Cr, Mn, Si, Mo, V.

12. Method according to any one of the preceding claims, **characterised in that** it is applied to a bearing, in particular to one or several of the bearing rings (2,3) and/or roller elements (4) of the bearing (1) concerned.
